# EUROPEAN PATENT APPLICATION

(11) **EP 2 312 503 A1**
(43) Date of publication of application: **20.04.2011**
(21) Application number: 10187344.6
(22) Date of filing: 12.10.2010
(51) Int. Cl.: G06K 19/07

(54) **Electronic personality card**

(30) Priority: 14.10.2009 GB 0917996; 30.04.2010 GB 1007275
(71) Applicant: Key Criteria Technology Ltd, London W1S 1DA (GB)
(72) Inventor: Anwer, Juraid, London, W1S 1DA (GB)
(74) Representative: Andrews, Martyn Peter

(57) **Abstract**

The invention resides in an electronic device that functions to create a multi-purpose, multi connection system that enables personality authentication, data and credit transfer to and from multiple consumer devices, such as mobile phones, computers, consumer electronics and any device capable of wired/wireless communication. The electronic personality card is configurable to exploit the capabilities of a host system by functioning as a hub that controls functions residing in a host such as video conferencing, VoIP, multimedia, Personal Information Management (PIM) features of the system. The smart card implements this control through client software installed in the ROM of the smart card. In one aspect, the invention resides in an electronic personality card having: a subscriber identity module (SIM) unit for enabling mobile telephony communication; a connection unit, connectable to the SIM unit, for communication with an electronic device; and a controller for controlling the SIM unit and/or the connection unit and storing information therein, wherein the electronic personality card is connectedly operable by a host device and configurable to consolidate and store information from the host device.

## Description

### Technical field

The invention relates to an electronic smart card, or electronic personality card, which is operable on its own or for use connected to an electronic device such as a mobile phone, personal computer, automobile, TV, gaming console and/or a remote resource. The invention relates further to a method of using an electronic personality card.

### Background art

A known Subscriber Identity Module (SIM) contains the International Mobile Subscriber Identity (IMSI) used to identify an individual on mobile telephony devices such as mobile phones and computers. Users are able to change phones and transfer their existing identity by simply removing the SIM card from one mobile phone and inserting it into another mobile phone or broadband telephony device. Current SIM cards contain their unique serial number, an international unique number of the mobile user, an IMSI key, security authentication and ciphering information, temporary information related to the local network, temporary local identification that has been issued to the user, and a list of services the user has access to.

Known SIM cards are also able to store data, and only a very small amount of data that can incorporate information such as contacts and recently received or sent text messages. SIM cards are restricted in use to operable connection to a single, or limited number of platforms that access specific models or functions according to the platform to which the unit is connected.

Unfortunately, known SIM cards have limited connectivity with other devices and their functionality is restricted by its hardware and the hardware connected to the SIM card, such as a mobile phone. Communication channels between the SIM card and another device tend to be fixed and, therefore, a user is restricted to a given configuration and/or functionality at any given time.

### Disclosure of the invention

The invention resides in an electronic personality card, or EPC, that functions to create a multi-purpose, multi- connection system that enables an individual's personality management and authentication, data and credit transfer to and from multiple consumer devices, such as mobile phones, automobiles and similar vehicles, computers, consumer electronics and any device capable of wired and/or wireless communication. The EPC can be connected to an electronic device via the USB port of said device.

In other words, the EPC can be configured to consolidate a user's information. The consolidated information can be utilised, or selectively utilised, by the EPC when communicating an electronic device. By way of example, the EPC can record a user's profile on one device, such as a personal computer, and present information according to the recorded user profile when the EPC is connected to a second device, such as the USB port in an automobile.

The EPC is configurable to exploit the capabilities of a host system by functioning as a master and/or hub that controls functions residing in a host such as video conferencing, VoIP, multimedia, Personal Information Management (PIM), gaming and other such features of the system. By way of example, the EPC connected to the USB port of an automobile can control one or more systems of the vehicle, such as the multi-media system, the telephone components and/or the security system. The EPC can implement this control through client software installed in the ROM of the smart card. The invention has the advantage that it is able to connect to various different types of electronic devices, and can be transferable between different types of devices. Further, it is also able to communicate with various different types of devices, as well as consolidate and store electronic data obtained from various devices, and communicate the consolidated and stored electronic data in its memory, such as its random access memory (RAM) area to various different types of electronic devices and to remote resources such as online storage facilities on the Internet.

The EPC can function as a hub without being a master. In other words, the EPC as a hub functions as a keystone and holds all the devices together, like a network interface, using the hub/node functionality to consolidate knowledge, relay and/or provide information to devices connected to the EPC.

The EPC is a fully functional computer system which can contain an embedded operating system resident on its ROM software. The EPC can affect all computing functions involving processing, interfacing, storage and data transfer. The fully functional computer system is operable as a hub.

The electronic personality device, or electronic personality card, has seamless, or universal, connectivity and utilises consolidated information when interfacing with other devices. The EPC operates in a ubiquitous and omnipresent manner, functioning in an integrated manner to control one or more functions of a host device.

In one aspect, the invention resides in an electronic personality card, or electronic smart card, having: a subscriber identity module (SIM) unit for enabling mobile telephony communication; a connection unit for communication with an electronic device; and a controller, wherein the electronic smart card is connectably operable by a host device and configurable to consolidate and store information from the host device.

The controller can control the SIM unit and/or the connection unit and store information therein. The controller can be a software controller. The connection unit can be connectable to the SIM unit. The connection unit can be connectable to the SIM unit for communication with an electronic device.

The connection unit can include a chipset integrated into the EPC. The EPC can include a reader device integrated into the invention. The SIM reader device can be connectable to the subscriber identity module (SIM) chipset.

The EPC can function as a central controller that can be an integrated or integral controller, or a hub, when connected to a host device. The EPC can be controllable by an interface of the host device, or by computer software residing on the EPC, or a combination thereof. In this way, the functional operation of the invention is achievable using the interfaces of a third party device, or host. The EPC can be configurable to connect to one or more host devices. The EPC can function as a master device to control the or each host devices. The EPC can function as a master device to control the or each host devices, and be operable by, or via, the or each host device.

By way of example, the EPC can function as a server within a local area network, thus enabling seamless connectivity. In other words, the EPC can connect to a number of electronic devices simultaneously and/or function as a common element for said devices such that communications with and/or between said devices is controlled by the EPC and/or relayed by the EPC.

The EPC can function as a key. The personal information or personality of the card can function to unlock and/or enable control. The EPC can control the devices with which is connected. The devices with which the EPC is connected can provide one or more interfaces to the hub, or EPC. The level, or degree, of control the EPC has of the or component that it connected to can be configurable in accordance with the personality information stored on the EPC.

The EPC can communicate with a device via a USB port. The EPC can function to communicate with two or more devices on the same communication channel. The EPC can discern between the devices that it is in communication with.

The control and/or connectivity with the or each host device are ubiquitous, enabling a user carrying an EPC to access and operate a number of electronic devices while on the move. This can be advantageous within an office environment where an employee can use an EPC to access and control multiple devices. For example, the EPC can be continuously connected to a central server in an office building while simultaneously connecting and disconnecting from devices that a user wishes to operate, such as telephones, projectors, printers, secure-access areas. Operation of each device connected to the EPC is seamless.

The EPC can be polymorphic, thus changing functionality according to the information that the device has consolidated. By way of example, a smart card can function and/or develop from an office-environment key, which enables access to various items of office equipment to include a passport function. To be clear, the function of the EPC can be determined by the information that it has consolidated and/or the environment that it is in. The EPC cannot be considered as having a single function because it can automatically adapt and change.

To function as a passport, a user can register and/or consolidate information gathered from an official source, such as a passport office, or embassy, wherein the smart card would connect to a secure controlled device, consolidate the information therefrom. The EPC can be activated by information consolidated from a source such as an official source. The connection with the or each host device can be securably encrypted. The encryption can be asymmetric. The securable encryption can comprise a user identification tag. The EPC can be operable as a key.

A secure code used, or created, by the EPC can be divided between two or more electronic devices. The electronic devices can be remote from the EPC and/or an electronic device requiring the code. By way of example, a first part of the code can be stored on the EPC, a second part of the code can be stored in a remote server dedicated to the EPC and a third part of the code can be located on another remote resource. The EPC can have a securable encryption that comprises a user identification tag.

The EPC can be configurable as a hub in a system comprising one or more host devices. The host device can be configurable to validate the identity of a person. The identity of a person can be validated by a biometric sensor.

In another aspect, the invention resides in a method of configuring an EPC, the method comprising: providing a subscriber identity module (SIM) unit for enabling mobile telephony communication; providing a connection unit, connectable to the SIM unit, for communication with an electronic device; providing a controller for controlling the SIM unit and/or the connection unit and storing information therein; providing the EPC with a connector that is connectable to a host device; configuring the electronic smart card to consolidate and store information from the host device.

The method can further comprise connecting the EPC to a host device and operating the host device from an interface of the host device, or can involve connecting the EPC to one or more host devices and configuring the EPC as a master device to control the or each host devices.

The method can comprise configuring the EPC to provide ubiquitous connectivity with one or more host devices. The method can comprise configuring the EPC to be polymorphic. The method can enable dynamic adaptability of the connectivity in accordance with the interface and/or purpose and/or functionality of the target device. The EPC can be configured as a hub in a system comprising one or more host devices.

The method can comprise controlling a host device to validate the identity of a person. The validation can validate an operating person using a biometric sensor.

In another aspect, that can be combined with the or each aspect described above, an aspect of the invention comprises an EPC which comprises, a subscriber identity module (SIM) chipset integrated into the EPC; a subscriber identity module (SIM) reader device integrated into the EPC, the SIM reader device being connectable to the subscriber identity module (SIM) chipset; a wireless radio chipset integrated into the EPC, the wireless radio chipset being connectable to the SIM chipset and the SIM reader; an integrated circuit being integrated into the EPC, and the SIM chipset, the SIM reader and the wireless radio chipset being connectable to and in communication with the integrated circuit; and an electronic data storage means being part of the integrated circuit, the electronic data to be stored in the electronic data storage means being obtainable from the SIM chipset, the SIM reader device, the wireless radio chipset or an electronic device.

The EPC can be connectable to and operable in an electronic device. The electronic device can be a mobile device, or a substantially stationary device such as a personal computer or a gaming console. The mobile device can be a mobile phone, a personal digital assistant (PDA), a mobile or handheld computer, or a mobile gaming device.

A computer software storage device, or means, can form part of the integrated circuit, the computer software storage device having computer software storable therein that recognises the type of electronic device to which the EPC is connected, and an appropriate electronic device computer program being loadable onto a connected electronic device by the stored computer software.

The EPC can be operable to communicate directly to an electronic device to which the EPC is connectable. The EPC can comprise an independent communication device and be operable on its own.

The EPC is operable to communicate via a mobile telephony network, via wireless communication with an electronic device such as mobile device or a personal computer, or via wireless communication with the Internet.

The electronic data obtained from at least one source of communication can be stored in the integrated circuit integrated into the EPC. Additionally or alternatively, the data can be stored in the cloud.

Electronic data from at least one mobile phone is stored on the SIM chipset. This electronic data can be exchangeable via a mobile telephony network, wirelessly with a second electronic device, or directly with an electronic device into which the EPC is insertable or with which it is connectable. The second electronic device can be, for example, a personal computer, a second mobile device, such as a second mobile phone, a PDA or a mobile computer.

Electronic data can include, for example, a user's contacts list, diary details, task lists, text messages sent and received, MMS messages sent and received, verification keys, electronic handshakes, passwords, voicemail messages, photograph files, video files, and email messages sent and received. The electronic data can also include, for example, a user's personal data from Internet services such as, for example, skype™, email service providers, and instant messaging service providers.

Electronic data can also include electronic forms of credit useful for cash transaction in products and services, making the EPC an electronic wallet, or e-wallet.

The integrated circuit of the EPC can be used to consolidate a user's personal electronic data. In one form of the invention a user's personal electronic data can be accessible from a plurality of electronic sources. The consolidated personal electronic data can be accessible to other electronic sources by communication with the EPC. The EPC can include an external connector that can provide further connectivity. The external connector can be, for example, a USB connector or a flash memory card connector.

An EPC can be operable to converge, or centralise, a plurality of electronic services accessible from a plurality of electronic sources together into the EPC, and operable to consolidate and store a user's personality profile and connectivity on the EPC.

Another aspect of the invention comprises a method of using an EPC as described above, the method comprising: converging and operating in the EPC a plurality of electronic services accessible from a plurality of electronic sources; and consolidating and storing a user's personal electronic data from the plurality of electronic sources on the EPC.

The user's personal electronic data can comprise the user's personality profile and connectivity functions.

Further according to the invention the method can further comprise: connecting the EPC with a mobile phone; obtaining electronic data stored on the SIM chipset integrated into the EPC by means of the SIM reader device integrated into the EPC; connecting the EPC with a first electronic device; exchanging electronic data between the first electronic device and the integrated circuit of the EPC; connecting the EPC with a second electronic device; exchanging electronic data between the second electronic device and the integrated circuit of the EPC; consolidating the electronic data obtained from the second electronic device with the electronic data obtained from the first electronic device and the electronic data obtained from the SIM chipset; storing the consolidated electronic data on the integrated circuit of the EPC; and communicating the stored and consolidated electronic data to a third electronic device.

According to the method a computer software storage means can form part of the integrated circuit of the EPC, the computer software storage means having computer software storable therein, the storable computer software recognising the type of electronic device to which the EPC is connected, and the stored computer software being operable to load an appropriate electronic device computer program onto the recognised connected electronic device.

The method can further comprise communicating the consolidated and stored electronic data via a mobile telephony network, wirelessly between the EPC and an electronic device, wirelessly between the EPC and the Internet or directly to an electronic device to which the EPC is connectable.

### Brief description of the drawings

The invention will now be described in more detail with reference to the accompanying drawings wherein:
Figure 1 shows a schematic diagram of an EPC operable in an electronic device;
Figure 2 shows a schematic diagram of an EPC operable in an electronic device;
Figure 3 shows a schematic diagram of an EPC device having various modules and arranged in a device connector configuration;
Figure 4 shows a schematic diagram of an EPC device in a battery connector configuration;
Figure 5 shows an EPC connected to two other devices; and
Figure 6 shows an EPC connected to and controlling a plurality of devices.

### Detailed description of the invention

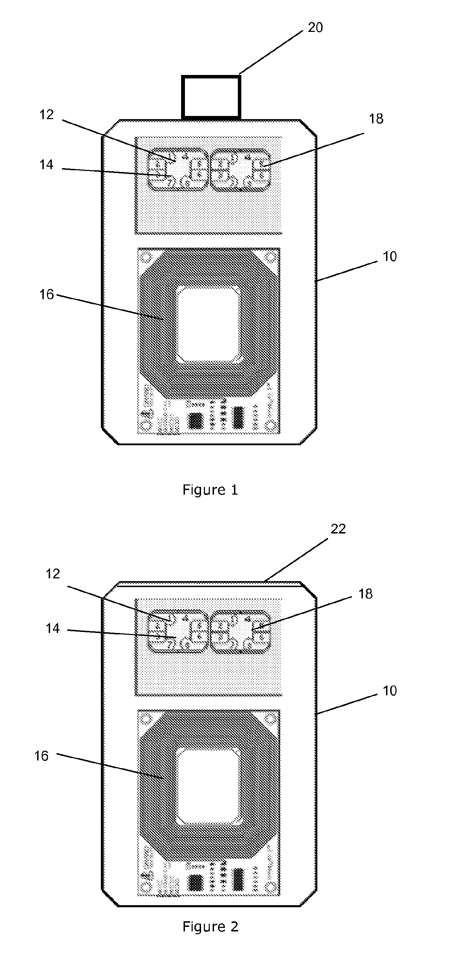

Example embodiments of an electronic smart card, or an electronic personality card (EPC) 10 for use in an electronic device such as a mobile device (not shown) and a personal computer (not shown) according to the invention are shown in Figures 1 and 2.

The EPC 10 comprises a subscriber identity module (SIM) chipset 12 and a subscriber identity module (SIM) reader device 14 integrated into the EPC 10. The SIM reader device 14 is connected to the SIM chipset 12 via electronic circuitry. The protocols for SIM data transmission can vary, and can range from any TCP/IP to UDP mechanisms that ensure end-to-end profile transmission.

The EPC 10 further comprises an integrated wireless radio chipset 16. The wireless radio chipset 16 is connected to the SIM chipset 12 and the SIM reader device 14 via electronic circuitry, and allows the EPC 10 to be operable to communicate wirelessly with a mobile telephony network, with an electronic device such as mobile device or personal computer, or with the Internet. The radio unit formed by wireless radio chipset 16 is, by way of example, based on a single-chip microstrip patch-antenna. It can function in any wireless network that supports 802.11 a/b/g/n (WiFi™), 802.16 a/d/e (WiMAX™), 802.20 (Flarion/OFDM), 3G LTE and any further upcoming wireless technologies. It can be controllable by software radio (SDR).

Also connected to SIM chipset 12, SIM reader 14 and wireless radio chipset 16 is a further integrated circuit (or microchip) 18 which is also integrated into the EPC 10. The microchip 18 is also capable of electronic data storage, the electronic data to be stored being obtainable from the SIM chipset 12, the SIM reader device 14 or the wireless radio chipset 16.

The EPC 10 is a small portable device that can reside on the chip die of an existing SIM card or it can include additional connectivity capability. It can be seen from the embodiment of the EPC 10 shown in Figure 1 that further connectivity can be provided by having a connector, such as a USB connector 20, located on one side of EPC 10. A further embodiment of EPC 10 is shown in Figure 2, where further connectivity capability is provided by one of the standard types of flash memory card connectors 22.

The EPC 10 can be connected to and used in a mobile device such as a mobile phone, a personal digital assistant (PDA), a mobile or handheld computer or a mobile gaming device. The EPC 10 can also be used in a substantially stationary device such as a personal computer or a gaming console. The EPC can be configured to function without a physical connection to another device. A computer software storage means also forms part of the integrated circuit. The computer software storage means is used to store computer software that is able to detect and recognise the type of electronic device to which the EPC 10 when it is connected. An electronic device computer program which is appropriate and applicable to the particular electronic device to which the electronic device is connected can then be loaded onto the connected electronic device by the stored computer software. The loaded appropriate and applicable electronic device computer program can be used to enhance communication and transfer of data and additional services to the connected electronic device.The EPC 10 is a tool, or means, by which a user is able to consolidate all the user's personal information in the form of personal electronic data available from different electronic sources located in different places, across storage facilities in many different electronic devices and online facilities on the Internet, and involving many different types of electronic services. This consolidated personal electronic data can also then be stored and backed-up in one place, namely the EPC 10, instead of being scattered in different proportions across these different devices and electronic services. Additionally or alternatively, the EPC 10 can also be used to further store this consolidated electronic data online through one or more storage facilities on the Internet or any such remote resource. The consolidated information stored as electronic data can also then be accessed readily by the user through various different types of devices and via the Internet.

The EPC 10 can have one or more communication channels to enable connectivity. The or each channel can be configured to discriminate between the devices that can communicate with the EPC. If the EPC has a plurality of channels then a single channel can be configured to communicate with a particular device. However, if only one channel is available or there are not enough channels available to enable each device to communicate via have a dedicated channel, then the or each channel can be configured to "hear" or "listen" to all of the signals being received and identify the connected devices from the mix of signals.

Similarly, the EPC can also "see" or "speak" to multiple devices. In other words, the or each EPC channel of the EPC is configurable to communicate to a plurality of devices and/or receive signals from a plurality of devices.

By way of example, an EPC being handled by a user as they walk through a room where the EPC can be in operable communication with a plurality of devices is analogous to a person walking through a room full of other people and having conversations with all of them substantially simultaneously. This is permitted, or enabled, through the unique identification of each device by a serial number, wireless chipset (MAC) address and/or any other means of identification that the EPC can use to identify a device. The EPC can use one more communication channels, or media, to recognise the unique identity of a device when in operable communication with a plurality of devices. The EPC can, therefore, able to discriminate between the signals being received from two or more devices on the same channel.

The EPC 10 can consolidate a user's information that is associated with each device with which it communicates.Once the EPC 10 has been connected to at least one mobile phone, the SIM data, which includes all the electronic data that is known as the "personality" profile of the user from that mobile phone, is stored on the SIM chipset. This information can be transferred or exchanged via a mobile telephony network, wirelessly between EPC 10 and a second electronic device, or directly to a second electronic device into which EPC 10 is inserted or to which it is connected via a connector. The second electronic device can be, for example, a personal computer, a second mobile device, such as a second mobile phone, a PDA, or a mobile or handheld computer.

Electronic data from the second electronic device can also be transferred back to EPC 10, and consolidated with the electronic data obtained from the first electronic device and already stored in the storage facility of microchip 18. In the same way electronic data from a third electronic device (and so on) to which EPC 10 is connected either via a telephony network, wirelessly or directly via connector can also be communicated or transferred back to EPC 10 and consolidated with the electronic data already stored in the storage facility of microchip 18. In this way, EPC 10 can assist a user in consolidating the user's personal electronic data, i.e., the user's electronic personality profile, available from different sources, and allows the user to store the consolidated data on microchip 18. This stored consolidated data can then be accessed on different electronic devices by merely transferring the data, or connecting EPC 10 to an electronic device and allowing the other electronic device access to the data, and for data to be exchanged. The electronic data can include, for example, the user of the mobile phone's contacts list, diary details, task lists, text messages sent and received, MMS messages sent and received, voicemail messages, photograph files, video files, and email messages sent and received. The electronic data can comprise a user's personal data from Internet services such as, for example, Skype™, email service providers, and instant messaging service providers. The data that is consolidated on the microchip can additionally, or alternatively, be stored on a remote server to improve security, storage capacity and/or accessibility.

By having a central consolidated store of information, the EPC 10 can deliver ubiquitous functionality and/or seamless connectivity of SIM-based communications (through SIM chipset 12 and the SIM reader device 14), including voice calls, data calls, contact and PIM data, which is otherwise known as the user's "personality" profile.

In other words, the information collated by the EPC allows it to be used in numerous applications in a seamless manner instead of a user having to use different devices that have different set-up configurations and/or personal information associated with them. The consolidated data accumulates knowledge and functions to enable the EPC to operate without interruption that could occur, for example, if a device were to request specific information that would normally have to be retrieved from a device that the EPC had previously communicated with.

The ubiquitous functionality, or seamless communication with a plurality of devices in a dynamic manner, is achievable because the EPC automatically recognizes one or more devices that is connectable with the EPC, and launches specific target software to exploit the functionality of each device. The specific target software can be, for example, a loader file. The loader file can be sent by the EPC to the device or, alternatively, the EPC or the device can retrieve the loader file from a remote resource, such as an internet server. In the latter case, the EPC instructs the device to retrieve the information from a remote resource. The loader file can implement functions on a device such as, for example, VoIP software, PIM management software, media playback software, EPC server upload software.

Overall, the EPC functions as a master device and uses the resources of other devices that it can communicate with. The devices that the EPC can communicate with, for example, can be local, using Bluetooth, or remote, using Wi-Fi access. In an automobile application, for example, the EPC can communicate directly with a multi-media system and also utilise the vehicles telephone antenna.

Together with this centralized information and seamless connection the EPC 10 is also able to deliver, by way of example, an automated connection radio unit (through wireless radio chipset 16) and an algorithm (through microchip 18) which provide the least cost routing for the EPC 10 to deliver an Internet connection, otherwise known as the "connectivity" function.

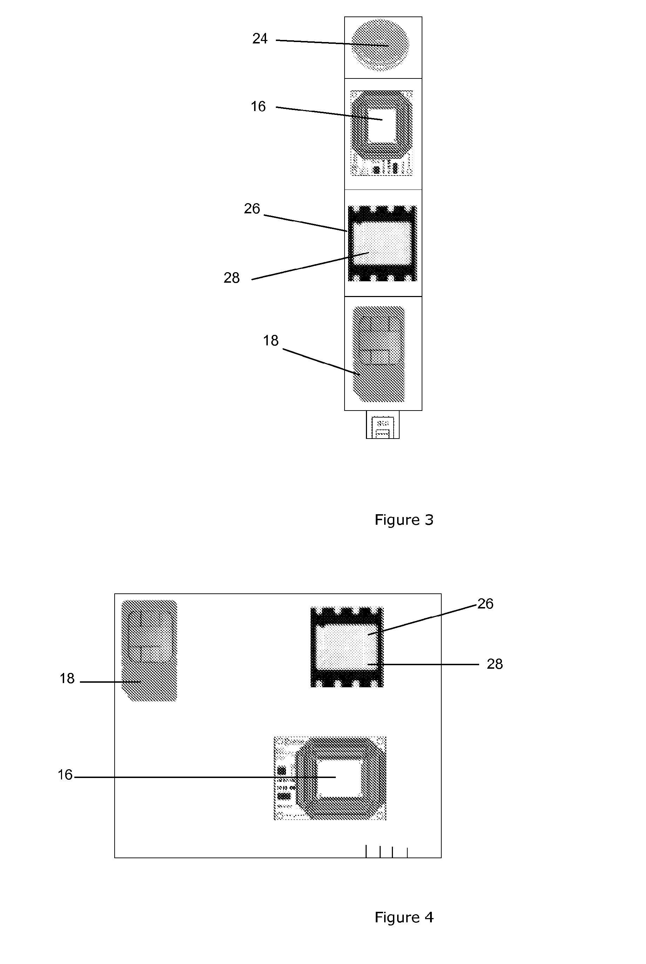

This combination of "personality" and "connectivity" features provides EPC 10 with a unique method of user personality profile transportation across various Internet service connections and electronic devices. EPC 10 can also be used on its own as an independent communication device. The EPC 10 can be implemented in various forms, further examples of which are shown in Figures 3 and 4 that show modules, or components of the EPC. The modules of Figures 3 and 4 share common functionality with the EPC as described herein.

The or each component of the EPC can be hot swappable, including a battery 24, a read only memory (ROM) 26, a random access memory (RAM) 28, the SIM Card 12, 14, the Wireless Interface 16, and the Connector Interface 20 as shown. Other functions, such as sensor means, can be bolted on and/or connected remotely via a host to which the EPC is connected.

The computer software allows for the user data backup or restore via remote wireless connection to an online server or host backup or restore via the connector to a storage system resident on the host system.

Figure 3 is indicative of the EPC configured in a plug-in format for connection to various devices such as a mobile phone, computer, television etc using interfaces such as USB, IEE 1394, HDMI and the like.

Figure 4 is indicative of the EPC 10 configured in a battery format to connect to various devices that are powered by removable storage such as a laptop, a mobile phone, a digital photo frame etc.

The EPC 10 can be used when connected to and operable in another electronic device or as an independent communication device. The EPC can be used to communicate with and exchange electronic data with a mobile telephony device via a mobile telephony network through the use of the SIM communication on SIM chipset 12 and SIM card reader device 14. It can also be used to communicate and exchange electronic data with an electronic device such as mobile device or a personal computer, or directly with the Internet by means of wireless communication through the use of the radio unit and wireless radio chipset 16. When EPC 10 is connected to another electronic device it is also operable to communicate directly to the electronic device to which it is connected via standard electronic connectors. The EPC can connect to another electronic device via a USB connection.

When the EPC 10 is connected to a personal computer it can, for example, bring up the Skype™ application and related electronic data, or it might bring up gmail™ and its related electronic data. When, on the other hand, EPC 10 is connected to or inserted into a mobile phone it can, for example, bring up SIM card data such as phone contact information and text messages. When EPC 10 is connected to or inserted into a mobile computer or PDA it can, for example, bring up contact information, calendar and diary information, and email information together with related electronic data.

Overall, the EPC 10 functions to vacuum a user's personal data from each device that it communicates with and stores that data on the EP itself and/or on a remote resource, such as an internet server. The EPC can differentiate between the security levels of personal information the EPC receives and store all or part of the information in a suitable location. By way of example, a user password can be stored on a remote resource. Alternatively, the user password may be split so that a portion of the password is stored locally while the remainder is stored in remote resource.

Connection between the EPC 10 and a third party device, or host device, is achieved using the connection methods described above. The structure and operation of the EPC enables it to function as a master device, connecting to facilities available on host devices. In other words, the EPC functions as a ubiquitous serial connection that can remain in a connected or operable state that exploits the capabilities of one or more host devices.

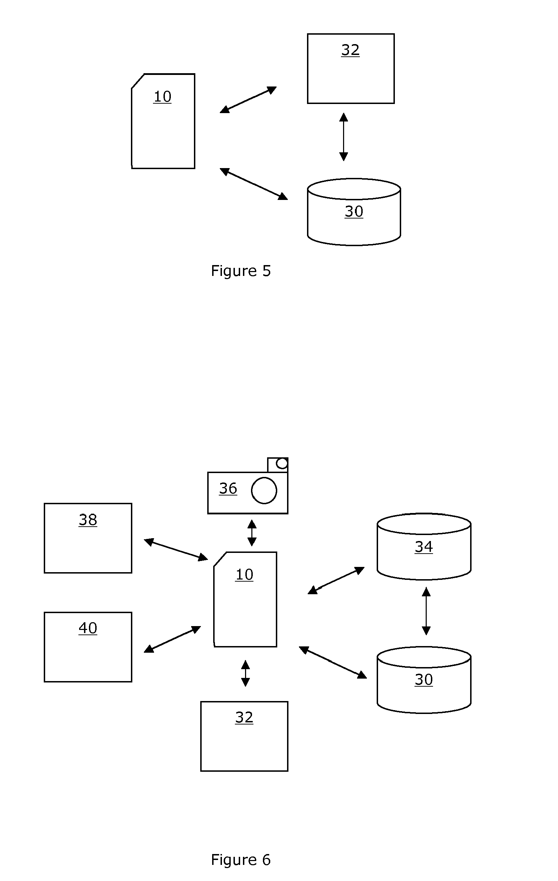

Figures 5 and highlight particular functions of the EPC 10 in different scenarios. Figure 5 shows the EPC 10 connected to a remote resource 30, such as a server 30, and a device 32. The device and the server can also be connected. The device 32 functions as a host for an interface to the EPC 10, and the server functions to store information associated with the EPC 10.

It will be understood that the EPC 10 can be connected to, communicate with, and obtain and consolidate electronic data from a plurality of electronic devices to which it is connected. The EPC 10 is thus a means of allowing a user to converge all available and different electronic services accessible from a plurality of electronic sources together into one device, EPC 10, and thus allowing a user's personality profile and connectivity functions to be consolidated and stored on the one device.

By way of example, an EPC 10 can be used to provide personal phone services to a user. A typical scenario may be an internet café supporting Wi-Fi. The EPC, having been connected to a device 32 operated by a user, such as a mobile phone, or personal computer, has consolidated personal information extracted from those devices that a user has been connected to. The personal information can be key information such as an address book. The EPC allows for the storage of an ID Tag, providing the creation of personal user configurations that are host-specific and/or store various personality traits such as passwords.

The device 32 is a desktop computer and the EPC 10 enables the creation of a "phone without a screen" through the use of the SIM/USIM functions, the software on the invention and the capabilities of the host system. For example, the EPC can enable the software on the invention to control the host system 32 to present a virtual phone display on the screen of the computer 32 that will enable video conferencing, VoIP calls etc.

Functionally, the EPC is brought within communication range of the computer device 32 and establishes a connection with the computer. This can be achieved by uploading a program to the computer. All or part of the program can be provided by the EPC 10, or the EPC can instruct the device 32 to download the program from the server 30. The EPC connection can be via a Bluetooth or Wireless connection. Once initiated on the computer, the computer 32 completes the connection with the EPC 10 and implements a program to launch a telephone interface on the screen of the computer. The interface functions as a virtual interface to the EPC 10. While connected to the computer, the EPC operates to store and consolidate user specific information on the EPC and/or the server 30 via the EPC.

Telephone services are provided to the user via the EPC, which operates as a master device, using the computer 32 as a host device. As a host device, the computer provides an operable interface and a display for telephone functions on the EPC.

In another example, the EPC 10 can function to provide telephone functionality via an adapted phone booth. Using seamless connectivity, a user having the EPC on their person can walk into a phone booth wherein the EPC connects with the land-based high-speed internet link provided in the phone booth. Rather than operating the phone booth in a conventional manner by using coins, cards or credit to access a connection, the EPC functions as a hub for the services provided by the phone booth, enabling a user to access the functionality and processing capabilities of the EPC via the interfaces of the phone booth, such as hand-set, keypad and/or display screen. The user then uses the EPC to access, by way of example, internet services using the EPC 10. Connectivity within the phone booth can be securely made via an encrypted communication via a network connection to a web-server that confirms characteristics of the EPC such as the identity, status and/or credit worthiness. Additionally or alternatively, the EPC can take control of functions of the phone booth to validate the identity of the holder of the EPC. To do so, the EPC 10 can request a personal identification signal, such as a voice pattern, from a web-server accessed via the phone booth. The EPC then controls the phone booth to request voice identification from the user and verify this against a pre-registered signal. The pre-registered signal can be stored on the EPC and/or the server 30. The EPC can, therefore, be configured to allow validation of whether a user is authorised to operate all of, or a selection of, the functions provided on the EPC.

Figure 6 shows the EPC 10 connected to a server 30 and a device 32 to access banking services. The device 32 can be a desktop computing device in a bank. A bank server 34, a camera 36, a recognition database 38 and a bank machine cash dispenser 40 are connectable to the EPC 10.

A typical scenario may involve a user carrying the EPC 10 and approaching a device 32 that will function as a host to provide an interface for the EPC to provide banking services. Via the interface, the EPC functions as a master to take control of the necessary components and devices for managing a bank account and withdrawing cash. The EPC also functions as a hub and relays information between devices that may or may not be directly connectable with the other.

By way of example, the EPC 10 via the device 32 can connect to the bank server 34 to request cash. For security the bank server can request authentication in the form of a password or similar key. The secure information can be stored on the EPC 10 and/or the server 30. In this case, the key is based on the facial features of the user and the camera 36 is activated using the EPC to take an image of the user's face, and send the image data to the recognition database 38 that can return information about the identity of the user. This information can be fed into the bank server 34 via the EPC to verify that the user is authorized to withdraw cash. The bank server 34 can validate the user from its own records and/or the bank server can request information from the EPC 10. Additionally or alternatively, the bank server 34 can communicate directly with the server 30 to confirm that the EPC holder is authorized to draw cash. Upon authorization, the bank server 34 can provide the EPC with a code that in turn is used to activate the bank machine to dispense the required cash.

In another example, the EPC 10 can utilise the functions and systems available in an automobile or similar vehicle. The EPC can connect to the automobile via a USB port, Bluetooth connection or any such connection. The EPC can function to play music via the automobile's entertainment system, retrieve and store vehicle performance parameters, relay vehicle information such as the performance characteristics to a remote resource, such as an EPC server, or authenticate the identity of an occupant of the automobile.

The EPC can communicate with a remote resource, such as an EPC server, using a vehicle features, such as a telephone antenna. The connection of the EPC to a vehicle enables the vehicle to function as a mobile phone and allow incoming and outgoing communication. A user can take an EPC from their telephone handset and transfer it to the vehicle or the EPC can communicate with the vehicle via the telephone handset. Once connected to the car, the EPC can use the vehicles power supply, antenna, speaker, microphone etc. to communicate.

In practice, a user carrying an EPC and entering a car can enable the EPC to connect with car. Using a similar technique as described above in the banking application, the vehicle can use the EPC to verify the intended driver of the car before enabling the car to be started and driven away. This enables he vehicle security to be improved. On approval, the driver can continue on his journey and listen to music accessed from the EPC 10 via an in-car entertainment system that would play the music or show a movie. The EPC can provide the music or movie information to be played or it may use the vehicles communication system to download music from a remote server.

As the vehicle continues on its journey, the EPC can relay performance information to a remote server. The remote server can respond to performance information provided by the EPC in situ and provide information to the EPC for use by the vehicle for, by way of example, tuning the vehicle to improve fuel consumption.

In another example, wherein the EPC is travelling in and connected to a vehicle, the EPC can communicate the speed, location and performance characteristics to a remote server using, by way of example, the vehicle or using a telephone handset. The journey information collated by the remote server from the EPC and from other EPCs in the area can be used to provide route guidance to the user and/or the vehicle to which the EPC is connected.

Although not shown, any one of the devices that the EPC is connected to, or controlling, can be configured to access, store and retrieve information from the server 30. Using encryption codes and/or personal user information as a key, secure access to a host device 32 and/or other functions is achievable. The EPC 10 can function as a passport or key. By using biometric information of a user, it is possible for a system comprising an EPC to verify that the user is present during an operation or a transaction. The computer software in the ROM of the invention allows for a user authentication based on a unique signature, such as those detected by a biometric sensor such as a fingerprint scanner, voice recognition device, iris scan camera or any other authentication method that is user specific.

The EPC and the computer software stored on the EPC and/or the server 30 allows for the updating or configuring the host system with data obtained from an ID Tag profile resident on the device. Similarly, the smart card can consolidate information read and/or received by an authentication device.

The computer software on the EPC 10 enables the EPC to be user-aware of third-party services that can be resident on the host system. Thus, the EPC can be described as a master and/or hub, functioning as a controller, detecting, operating and surviving on the resources of a host to which it is connected. The EPC can also function independently of a host by battery-operated power and/or a kinetic energy store.

The EPC 10 can function in an external manner, wherein the EPC is external to the host. The smart card can, for example, reside in part of a credit-card, in the watch or bracket of a user. The EPC can even, for example, reside in the human body in the form of a micro-chip or similar type of structure. Thereafter, the mere presence of a user having an EPC within the body enables the user to access the functionality of a host.

In an internal configuration, the EPC can reside within the body of a user in the form of a micro-chip or similar type of structure. In a way, the user becomes a controller by carrying the smart card within them.

It is not impossible that an EPC can be transferred from one body to another and, therefore, biometric security functionality is provided by the EPC that validates the identity of the user. The EPC can incorporate, for example, biosensors and/or gene chips, which provide fast, sensitive and selective detection of DNA hybridization. The EPC can incorporate DNA biosensors, DNA electrochemical biosensors, gene chips and miniaturized ('Lab-on-a-Chip') DNA analyzers.

Alternatively, the EPC 10 can function in an internal manner, wherein the EPC resides within the host, such as a mobile phone device. In turn, the mobile phone device having an EPC can function in an external manner to function as a hub and or a master for a device 32.

Various examples of applications of the above mentioned EPC are described below. One or more means of implementing connectivity and control are possible in light of the present teaching. The EPC 10 can have identification (ID) Tag that can comprise an electronic key, such as an encryption code. The key enables the EPC 10 to create and/or be configured with personal user configurations that are host-specific i.e. specific to the device and/or application that the EPC is being connected to. Additionally, or alternatively, the EPC can store various personality traits such as passwords, or an encrypted key. The trait can include biometric data.

The computer software in the ROM of the invention is configured to enable user authentication based on a unique signature, such as a fingerprint, voice recognition, iris scan, brain-wave signature, DNA signature or any other authentication method that is user unique/specific. If an EPC is configured to be operable only by a single user, the EPC can be used as a passport, or other secure key. As described above, the EPC in the possession of a user can initiate a connection with a security terminal, such as passport control, which comes within range of the EPC. After connection is established, the EPC takes control of the security terminal to access secured personal characteristics, such as a voice pattern, iris-pattern or similar biometric information. The information can be held by the security terminal or can be accessible via the server 30, web, or cloud.

The EPC proceeds to determine the identity of the user in possession of the EPC by means taking control of, for example, an iris recognition camera incorporated in the security terminal. The EPC, therefore, determines whether the user is authorised to possess the EPC. Similarly, a third party device, such as the security system described above, can implement its own validation process instead of, in addition to or in parallel to the validation procedure carried out by the EPC.

Through the computer software, the EPC is configurable to create an electronic wallet (e-wallet) to permit the use, authentication, and transfer of credit to and from the authenticated user's bank accounts. This e-wallet software can connect to the user's various bank accounts, and allow for any transactions to be effected at any point of sale (PoS) terminals via wireless or wired connections provided by the invention. Connection is initiated with an unknown computer and after connection is made the authenticity of the user can be validated. Validation is achievable without personal information being uploaded onto the unknown computer because the EPC functions as a host, taking control of the functions of the computer, such as the keyboard, mouse, display, web-cam and the like.

The EPC can, therefore, be considered as a dynamic and/or portable hub, or key, which functions as a master controller to operate in a continuous manner with third-party devices. A server 30, network, or the cloud, can be used for independent or autonomous security clearance.

The EPC 10 can function and to be omnipresent or operate ubiquitously. A user can carry the EPC from home, to an internet-café or a bank and then on to an office environment. Each location has devices 32 that the EPC can control.

Starting at home, a user can use the EPC as a master device to access telephone facilities on a device 32 such as a desktop computer or television display. The EPC functions to install an interface on the device that can, for example, control the input to the EPC using a keypad. Similarly, the EPC can use the device 32 to display a downloaded movie or game. The home environment is representative of the configuration of Figure 5 in which the EPC acts as a master to control a device 32, using a server 30 as required.

A user may travel from home to a bank where the EPC is not only required to be a master controller and use the device 32 for input and display purposes, but also act as a hub to link and/or provide a connection between several devices. The server 30 provides the EPC with the necessary information and/or data in order to change the functionality of the EPC for operation in a new environment. The bank environment is indicative of the set-up shown in Figure 6.

Thereafter, the user can travel to a workplace environment where there are numerous devices 32 that he can use, such as desktop computers, projectors, printers and the like. Not only is the EPC able to seamlessly move from a home location 42 to a bank to an office but the EPC adapts and modifies its functions accordingly. In other words, the EPC can be polymorphic and change its form and function according to the environment in which it will be used. The EPC can adapt to an environment for the first time by accessing the server 30 for configuration information, protocols for communication with new devices and programs for installing in device 32 to establish connectivity therebetween.

The EPC 10 has an internal processor, memory and can communicate through direct or wireless connection. Through access to the server 30 the functionality and ability of the EPC to function as a master device and/or as a hub through which data passes can be upgraded. In this way the EPC is adaptable to perform new tasks. In general, if the server 30 does not have the information required by the EPC it can retrieve the information from another server, a database, the cloud or the like.

An EPC can be configured to be operable by a number of users, having accumulated several users' identities and personal characteristics. Functionality of the EPC, therefore, can be accessed according to the level of security, or access level permitted to a user. By way of example, an EPC can be shared by a family, with each family member holding multiple identities and personal characteristics. These identities can be stored locally on the EPC 10 or on the server 30. Accounts for each user can be selected via an interface on the host device 32. Children of the family, however, can be restricted to use of the telephone functions, which can be further restricted to their own address books. The parents, on the other hand, can have full access to credit functions, such as banking services.

The present invention has been described above purely by way of example, and modifications can be made within the spirit and scope of the invention, which extends to equivalents of the features described and combinations of one or more features described herein. The invention also consists in any individual features described or implicit herein or shown or implicit in the drawings or any combination of any such features or any generalisation of any such features or combination.

## Claims

1. An electronic personality card having: a subscriber identity module (SIM) unit for enabling mobile telephony communication; a connection unit for communication with an electronic device; and a controller, wherein the electronic personality card is configurable to connect to a host device and is configurable to consolidate and store information from the host device.

2. An electronic personality card according to claim 1, wherein the electronic personality card is configurable to function as an integral controller when connected to a host device and is controllable by an interface of the host device.

3. An electronic personality card according to claim 1 or 2, wherein the electronic personality card is configurable to connect to one or more host devices and function as a master device to control the or each host devices.

4. An electronic personality card according to any preceding claim, wherein control and/or connectivity with the or each host device is ubiquitous.

5. An electronic personality card according to any preceding claim, wherein the electronic personality card is polymorphic.

6. An electronic personality card according to any preceding claim, wherein the connection with the or each host device is securably encrypted.

7. An electronic personality card according to any preceding claim, wherein the electronic personality card is configurable as a hub in a system comprising one or more host devices.

8. An electronic personality card according to any preceding claim, wherein the electronic personality card is configurable to connect to a host device, said host device configurable to validate the identity of a person.

9. An electronic personality card according to any preceding claim, wherein the electronic personality card is configured to communicate with a device, such as a host device, via a USB connection.

10. An electronic personality card according to any preceding claim, wherein the EPC is configured to communicate with two or more devices on the same communication channel.

11. A method of configuring an electronic personality card, the method comprising: providing a subscriber identity module (SIM) unit for enabling mobile telephony communication; providing a connection unit, connectable to the SIM unit, for communication with an electronic device; providing a controller for controlling the SIM unit and/or the connection unit and storing information therein; providing the electronic personality card with a connector that is connectable to a host device; configuring the electronic personality card to consolidate and store information from the host device.

12. A method according to claim 10, further comprising connecting the electronic personality card to a host device and operating the host device from an interface of the host device.

13. A method according to claim 11 or 12, further comprising connecting the electronic personality card to one or more host devices and configuring the electronic personality card as a master device to control the or each host devices.

14. A method according to any of claims 11 to 13, further comprising configuring the electronic personality card to provide ubiquitous connectivity with one or more host devices.

15. A method according to any of claims 11 to 14, further comprising configuring the electronic personality card as a hub in a system comprising one or more host devices.
